# EUROPEAN PATENT SPECIFICATION

(11) **EP 1 338 339 B1**
(45) Date of publication and mention of the grant of the patent: **27.09.2006**
(21) Application number: 03003077.9
(22) Date of filing: 12.02.2003
(51) Int. Cl.: B01L 3/02, G01N 35/10

(54) **A system and method for verifying the integrity of the condition and operation of a pipetter device for manipulating fluid samples**
System und Verfahren zur Kontrolle der Integrität des Zustands und der Operation von Pipettiervorrichtungen zur Manipulation flüssiger Proben
Système et procédure de contrôle de l'intégrité de la condition et de l'opération d'un dispositif pour pipettes pour la manipulation d'échantillons fluides

(30) Priority: 13.02.2002 US 73207
(43) Date of publication of application: 27.08.2003
(60) Divisional application: 05105471.6
(73) Proprietor: Becton Dickinson and Company, Franklin Lakes, New Jersey 07417 (US)
(72) Inventor: Hansen, Timothy R., Spring Grove, PA 17362 (US); Benton, Gene Alan, White Hall, MD 21161 (US); Armstrong, Matthew J., Joppa, MD 21085 (US)
(74) Representative: Gerbino, Angelo

(56) References cited:
- EP-A- 0 341 438
- EP-A- 0 571 100
- US-A- 6 158 269

## Description

### Field of the Invention

The present invention relates to a system and method for verifying the integrity of the condition and operation of a pipetter device for manipulating fluid samples in test tubes. More particularly, the present invention relates to a system and method for an automated pipetter device that makes use of pressure transducers to detect the presence and integrity of filtered pipette tips on the nozzle of the device.

### Background of the Invention

A variety of molecular biology methodologies, such as nucleic acid sequencing, direct detection of particular nucleic acids sequences by nucleic acid hybridization, and nucleic acid sequence amplification techniques, require that the nucleic acids (DNA or RNA) be separated from the remaining cellular and non-cellular sample components. This process generally includes the steps of collecting a sample containing the cells of interest in a sample tube. The sample is then treated with heat or heat plus reagent, which causes the cells to rupture and release the nucleic acids (DNA or RNA) into the solution in the tube. Alternatively, the sample tube is placed in a centrifuge and spun down to separate the cells from other sample components. The resulting pellet is then re-suspended with an appropriate buffer and lysed as described above. The lysed solution containing free nucleic acids is removed from the sample tube by a pipette or any suitable instrument. The solution is then transferred to other tubes or microtiter wells containing reagents necessary for the desired downstream application. One such application, the amplification and detection of specific nucleic acid sequences, requires the addition of priming sequences, fluorescein probes, enzymes, and other reagents. The nucleic acids are then detected in an apparatus such as the BDProbeTec® ET system, manufactured by Becton, Dickinson and Company and described in U.S. Patent No. 6,043,880 to Andrews et al.

In order to properly control a pipetter device to draw fluid from a sample container such as a test tube, it is necessary to know the level of the sample fluid in the tube so the pipette can be lowered to the appropriate depth. It is also necessary to detect whether the pipette tip has been properly connected to the pipetter device. Prior methods to detect the level of a fluid in a container include the use of electrical conductivity detection. This method requires the use of electrically conductive pipette tips connected to a sensitive amplifier which detects small changes in the electrical capacitance of the pipette tip when it comes in contact with an ionic fluid. Pipette tip detection in this known system is achieved by touching the end of the conductive pipette tip to a grounded conductor. Drawbacks of this approach include the higher cost of conductive pipette tips, and that the method only works effectively with ionic fluids. In other words, if the fluid is non-conductive, it will not provide a suitable electrical path to complete the circuit between the conductors in the pipette tip.

A system and method for the measurement of the level of fluid in a pipette tube has been described in U.S. Patent No. 4,780,833. Atake's system and method involves applying suction to the liquid to be measured, maintaining liquid in a micro-pipette tube or tubes, and providing the tubes with a storage portion having a large inner diameter and a slender tubular portion with a smaller diameter. A pressure gauge is included for measuring potential head in the tube or tubes. Knowing the measured hydraulic head in the pipette tube and the specific gravity of the liquid, the amount of fluid contained in the pipette tube can be ascertained.

Devices used in molecular biology methodologies can incorporate the pipette device mentioned above, with robotics, to provide precisely controlled movements to safely and carefully move sample biological fluids from one container to another. Typically, these robotic devices are capable of coupling to one or more of the aforementioned pipette tips, and employ an air pump or other suitable pressurization device to draw the sample biological fluid into the pipette tips. However, these robotic systems presently have no suitable mechanism to determine whether any of the pipette tips are defective or have been properly acquired by the robot.

Therefore, there exists a need for a system and method for determining when a defective pipette tip has been acquired by a robotic device which is used in the fluid sample transfer process.

### Summary of the Invention

It is therefore an object of the invention to use existing pipette technology to determine the condition of a pipette tip has been acquired by a robotic device performing a sample transfer, so that prior to insertion pipette tip into the fluid sample, it can be discarded if it is defective, thereby preventing waste of the sample or unacceptable handling of the sample.

These and other objects of the invention are substantially achieved by providing a method for determination of a pipette tip's condition, comprising the steps of measuring pressure in a nozzle, acquiring a pipette tip with the nozzle, determining whether said pressure in the nozzle changes upon acquisition of the pipette tip, and ascertaining the condition of the acquired pipette tip based on the change in air pressure.

Still another object of the invention is substantially achieved by providing another method for determination of a pipette tip's condition, comprising, measuring pressure in a nozzle, acquiring a pipette tip with the nozzle, determining a maximum air pressure in the nozzle upon acquisition of the pipette tip and ascertaining the acquired pipette tip's condition based on the rate of change in air pressure after the maximum air pressure was reached.

A system for determination of a pipette tip's condition, is provided comprising an air pump in communication with a nozzle, and a pressure transducer, adapted to measure a change in air pressure in the nozzle as the pipette tip is acquired by the nozzle.

### Brief Description of the Drawings

The novel features and advantages of the invention will be best understood by reference to the detailed description of the specific embodiments which follows, when read in conjunction with the accompanying drawings, in which:
Fig. 1 illustrates a typical implementation of a robotic pipetting system for manipulating fluid samples which employs a system and method according to an embodiment of the present invention;
Fig. 2 is a conceptual block diagram illustrating a cross sectional view of a pipetter device and pipette tip employed in the system shown in FIG. 1;
Fig. 3 illustrates a frontal view of an industrial application of the pipetter device;
Fig. 4 illustrates a right side view of the pipetter device;
Fig. 5 illustrates a bottom perspective view of the pipetter device;
Fig. 6 illustrates a front perspective view of the pipetter device;
Fig. 7 illustrates a conceptual block diagram of a controller board assembly used with the system shown in Figure 1;
Fig. 8 illustrates a graph depicting an example of air pressure versus time during pipette tip acquisition, for a non-defective pipette tip;
Fig. 9 illustrates a graph depicting an example of air pressure versus time during pipette tip acquisition, and its subsequent ejection, for a defective pipette tip;
Fig. 10 illustrates a graph depicting an example of air pressure versus time during ejection of a non-defective pipette tip;
Fig. 11 illustrates a graph depicting an example of air pressure versus time during insertion of a pipette tip into a fluid sample;
Fig. 12 illustrates a flow diagram of an example of a first method according to an embodiment of the invention; and
Fig. 13 illustrates a flow diagram of an example of a second method according to another embodiment of the invention.

### Detailed Description of the Invention

The various features of the invention will now be described with reference to the figures, in which like parts are identified with the same reference characters.

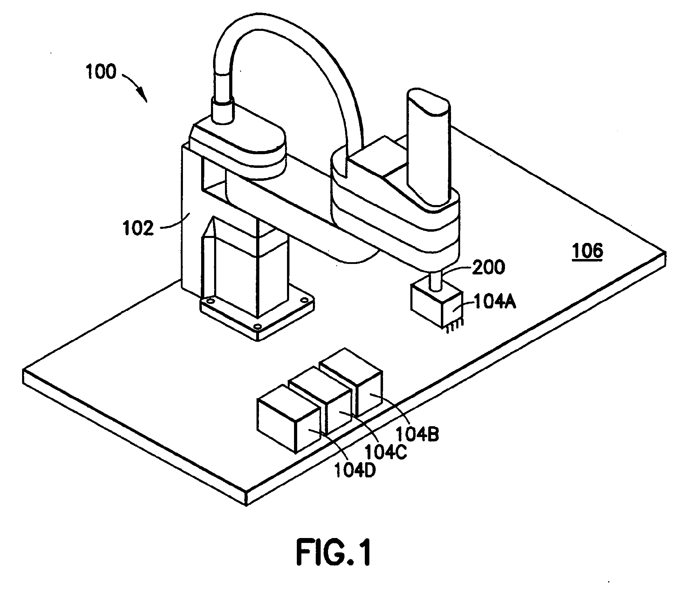

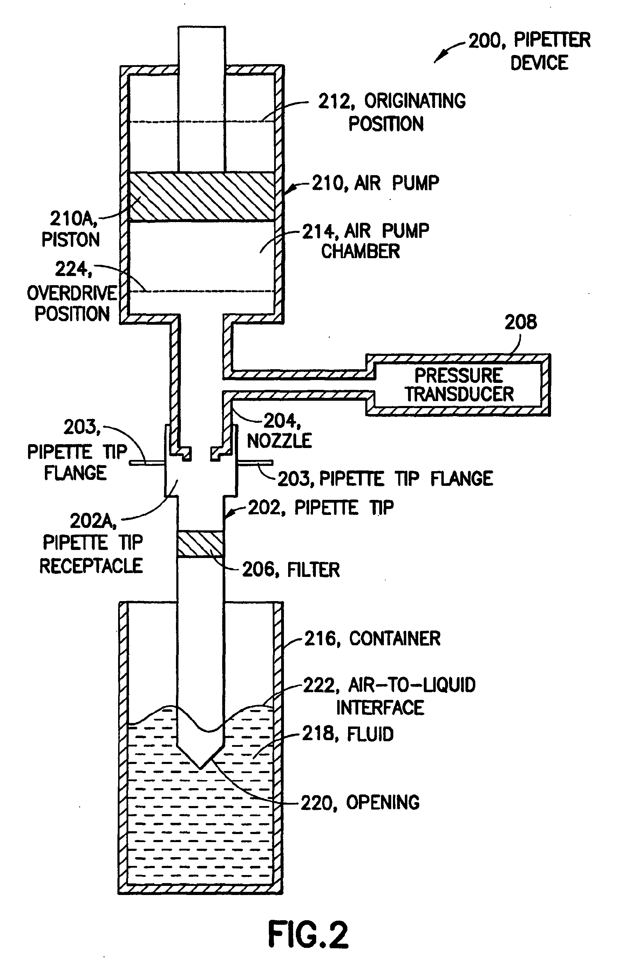

Figures 1 and 2 illustrate a typical implementation of a robotic pipetting system pipetter device and pipette tip, for manipulating fluid samples which employs a system and method according to an embodiment of the invention. Pipetter device 200, attached to the end of a robotic arm 102, can acquire disposable pipette tips 202 from a holder onto the pipetter device nozzle 204.

The disposable pipette tips 202 are used to transfer biological (fluid) samples 218 from one container 216 in a diagnostic process to another. Each fluid sample 218 transfer requires a new pipette tip 202 to prevent cross contamination between fluid samples 218. Additionally, each pipette tip 202 contains a filter 206 that prevents the fluid sample 218 from contaminating the nozzle 204 of the pipetter device 200. As shown in Figure 2, the pipetter device 200 employs a pressurization apparatus such as air pump 210, with piston 210A. The interior portion of air pump 210 is an air pump chamber 214 and is in communication with pressure transducer 208, which measures the air pressure within the cavity formed within air pump 210 nozzle 204 of pipetter device 200 and pipette tip 202. Shown also in Figure 2 are originating position 212 and overdrive position 224, which conveys the extent of travel of piston 210 within air pump 210. These features will be discussed in detail below.

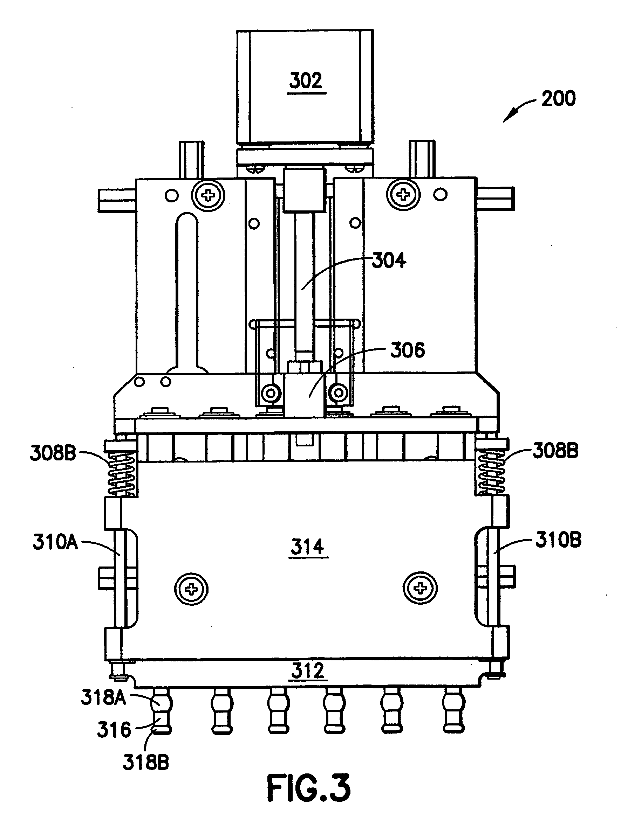

Figures 3-6 illustrate various views of an industrial application of the pipetter device 200 and pipette tip 202 shown in Figures 1 and 2. Figure 3 illustrates a frontal view. In Figure 3, motor 302 is shown connected to lead screw 304. Lead screw 304 is, in turn, also connected to piston drive bar 306. Piston drive bar 306 is connected to actuating bars 310A and 310B, and both actuating bars 310A, 310B are connected to ejection bar 312. Springs 310A (left side) and 310B (right side) act upon body part 314 to resist downward motion of piston drive bar 306, and actuating bars 310A, 310B and ejection bar 312. However, springs 308A, 308B are chiefly intended to assist in returning the aforementioned components to their resting position. The combination of motor 302, lead screw 304, piston drive bar 306, springs 308A, 308B, actuating bars 310A, B and ejection bar 312, comprise the tip ejection assembly.

The tip ejection assembly is designed to facilitate easy insertion of pipette tips 202 into nozzles 204, yet provide a reliable means and manner for proper ejection of used and/or defective pipette tips 202. Ejection bar 312 performs the physical ejection of pipette tips 202. Ejection bar 312 has a plurality of holes; each hole allowing nozzle 204 to pass through it, so that it might be received into a pipette tip 202. However, pipette tip 202 cannot pass through ejection bar 312, because at the very bottom of pipette tip 202, there is a flange 203 having a dimension larger than the body of pipette tip 202 and larger than the diameter of the holes in ejection bar 312. Additionally, there are pipette tip adapters 316, with upper adapter flange 318A and lower adapter flange 318B. Upper adapter flange 318A and lower adapter flange 318B mate with pipette tip 202, providing a two-point seal that inn turn provides an air-tight interface between pipetter device 200 and pipette tip 202.

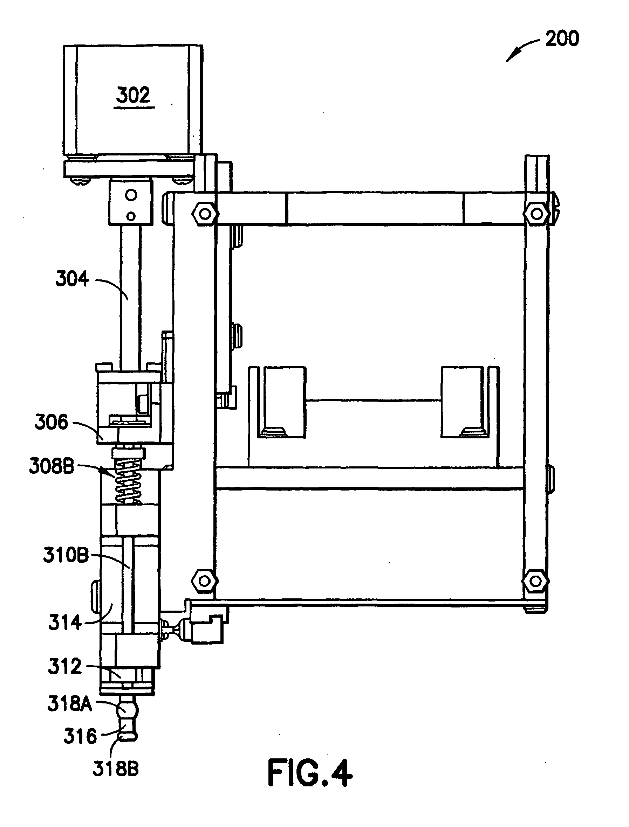

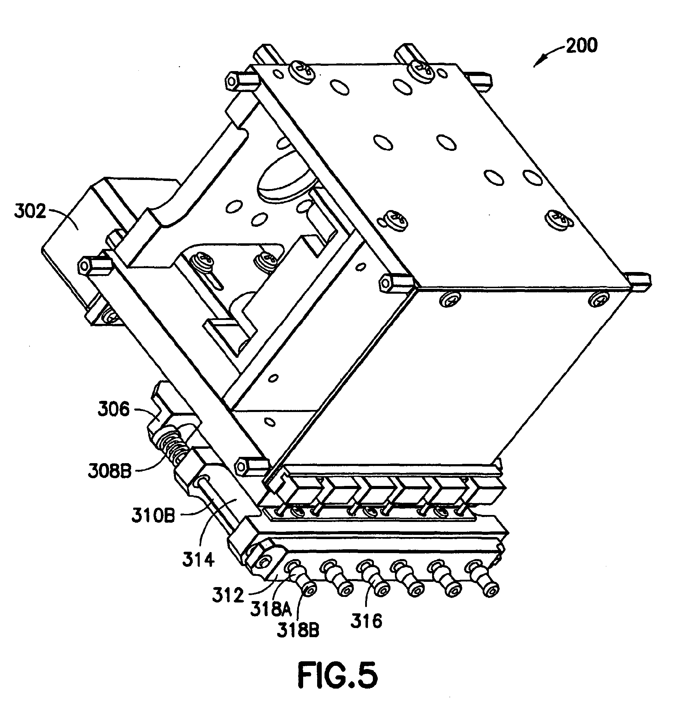

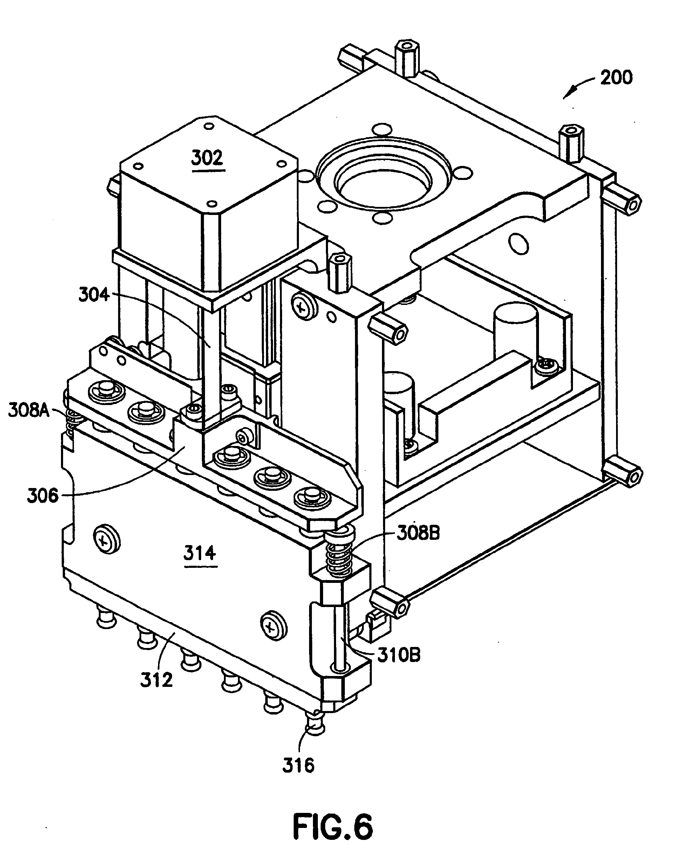

To eject pipette tips 202, motor 302 turns lead screw 304, which in turn forces piston drive bar 306 down. As piston drive bar 306 moves down, it forces actuating bars 310A, 310B down. This movement causes ejection bar 312 to move down, until ejection bar 312 encounter flanges 203 of pipette tips 202. Flange 203 and ejection bar 312 come in contact and as ejection bar 312 continues its downward movement, it ejects pipette tips 202 from its mated connection with nozzle 204. Then, motor 302 reverses and all the components of the tip ejection assembly move in the opposite direction. Springs 308A, 308B, which were compressed by the downward motion now decompress and assist in forcing the entire ejection assembly to its resting position. Figures 4-6 show different views of pipetter device 200 and pipette tip 202. Figure 4 is a right side view; Figure 5 is a bottom-perspective view; and Figure 6 is a front-perspective view.

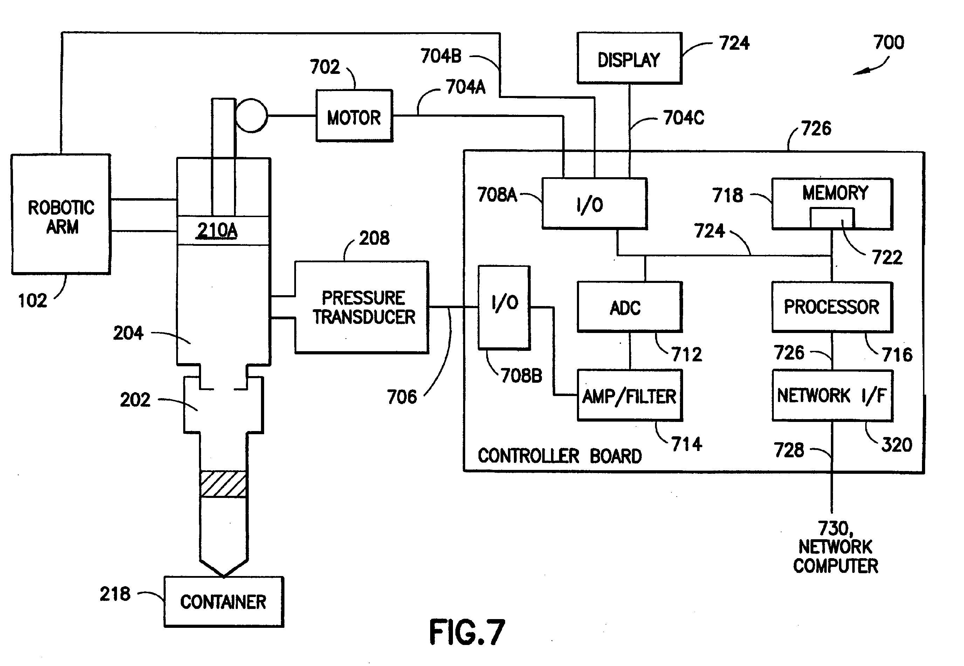

Figure 7 illustrates a conceptual block diagram of a controller board assembly used with the system shown in Figure 1. It is well known in the art that a robotic arm 102 may be controlled by a controller board 726 that is part of controller assembly 700. Controller board 726 may contain processor 716 and memory 718 that stores executable software (system software) 722 that controls operation of robotic arm 102, and pipetter device 200.

In general, controller assembly 700 will be designed to be able to control numerous robotic arms 102. The number of robotic arms 102 able to be controlled by a single controller board is dependent upon several factors, including, but not limited to, the processing capability of processor 716 on the controller board, data acquisition rates, amount of memory, difficulty of tasks the robotic arms must perform, and how much data must be acquired about environmental conditions or the manufacturing process itself.

As further shown in Figure 7, a typical controller assembly includes controller board 726, data and control cables 704A-C and 706 that can be coupled to display 724, motor 702 (that can control movement of piston 210A), pressure transducer 208 and robotic arm 102. Data and control cables 704A-C might also be one continuous cable in some particular applications. As discussed above, controller board 726 includes memory 718, which contains system software 722, and can be connected by internal bus 724 to processor 716. Processor 716 can be connected to network card 720, by a second internal bus 726, which can transfer collected data to and from network computer 730. Processor 716 can communicate with analog-to-digital converter (ADC) 714 and input/output devices (I/O) 708A by internal bus 724. I/O 708B is a different type of interface. Because it receives analog signals, these often require special cabling and coupling techniques to prevent the coupling of noise onto the signal. I/O 708B are often separated from purely digital signals for these reasons. The received analog signal from I/O 708B is first processed by AMP/filter 714, which may contain an amplifier, filter, or even a level shifter, depending on the nature of the analog signal and ADC 712.

Controller assembly 700, used in conjunction with an embodiment of the invention, is shown having a single ADC 712 and amplifier circuit 714. In general, the amplifier 714 might also include a filter, which might be necessary depending on the nature of the analog signal received by controller board 726. Controller board 726 communicates with robotic arm 102 via control/data bus 704B. Control bus 704A transmits control data from processor 716 to robotic arm 102, and receives data from robotic arm 102, which is reported to processor 716. In this manner, motion control data is given to robotic arm 102, and motion data that reports the movement of robotic arm 102 is fed back to processor 716, providing a means for checking the movement and positioning of robotic arm 102. Such data can include relative and absolute position in three axes (x, y and z), and relative and absolute velocity, acceleration and even angular velocities and acceleration measurements in the three axes.

Controller assembly 700 communicates in a similar fashion with motor 302. Control/data bus 704A transmits control data to motor 302, which controls the movement of piston 210A of air pump 210. Pressure transducer 208 outputs an analog pressure transducer (APT) signal 732, transmitted on analog signal line 706, which is connected to I/O 708B on controller board 726. For use in biotech and pharmaceutical industries, pressure transducer 208 is capable of detecting pressure with a resolution of 0.5 psi. After being received on I/O 708B, APT signal 732 is input to AMP/filter 714, which then outputs conditioned APT signal 734 to ADC 712. ADC 712 converts conditioned APT signal 734 to a digital word, which can be processed by processor 716. In this manner, processor 716 ascertains the air pressure in pipetter device 200, and the methods of the invention including determining the volume of liquid in pipette device 200, determining whether or not pipette tip 202 has entered fluid sample 218, and determining whether or not a defective pipette tip 202 has been acquired by the robotic arm, and if not defective, when it has been discarded.

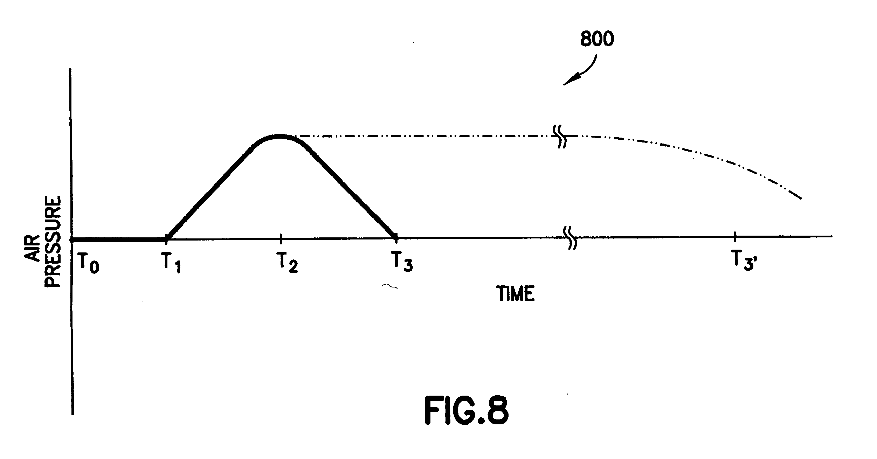

Figure 8 illustrates a graph depicting an example of air pressure versus time during pipette tip acquisition, for a non-defective pipette tip. During pipette tip 202 acquisition, robotic arm 102 moves pipetter device 200 to a holder that contains one or more pipette tips 202 (time T₀ in Figure 8). Robotic arm 102 then positions nozzle 204 of the pipetter device 200 over a pipette tip 202 and pushes the nozzle 204 into pipette tip receptacle 202A (time T₁ in Figure 8). As nozzle 204 is pushed into the pipette tip 202, air is forced through the filter 206. This occurs between T₁ and T₂ in Figure 8. Referring back to Figure 2, air would flow through nozzle 204, filter 206 and out opening 220 of pipette tip 202. Because filter 206 restricts airflow, a momentary increase in air pressure is produced. In describing the embodiments of the invention, the convention used is that any increase in air pressure recorded by pressure transducer 208 is shown as a positive value (above the x axis). This is the situation when air enters pipette tip 202. If air is released, or a vacuum created, air pressure is shown decreasing or becoming a negative value.

Pressure transducer 208 mounted between the nozzle 204 and air pump 210 detects this momentary increase in air pressure and allows system software 722 to identify that a non defective pipette tip 202 has been acquired, and that filter 206 is in pipette tip 202.

At time T₂, the air pressure measured by transducer 208 has reached a maximum, and begins to decay from time T₂ to T₃. During the period of time from T₂ to T_{3,} filter 206 allows the air pressure to decrease to 0. This occurs because filter 206 is porous. The periods T₁ to T₂, and T₂ to T₃ are dependent upon the type of filter 206 (i.e. what materials and manufacturing method used), and how fast nozzle 204 is inserted into pipette tip 202 (for the T₁ to T₂ period). In some applications, it is necessary for the air pressure to return to 0. Note that for a defective pipette tip 202, which was completely blocked, i.e., little or no porosity in filter 206, the air pressure versus time diagram would look similar to that of Figure 8. The chief difference would be that the time it would take for air to escape from pipette tip 202, through filter 206 (if at all possible), would be much longer. This is shown in Figure 8 as the dashed lines in Figure 8. Note that the dashed line of Figure 8 eventually does return to zero at time T_{3'}. As such, it may be possible to differentiate between a non-defective pipette tip 202 and a defective pipette tip 202 due to a completely or partially blocked filter 206, by way of examining the rate of decay of the air pressure versus time, after a maximum air pressure had been reached after insertion of pipette tip 202. Although this may have to be done on a trial basis, such a method can ensure the detection of defective pipette tips 202 due to blocked filters 206.

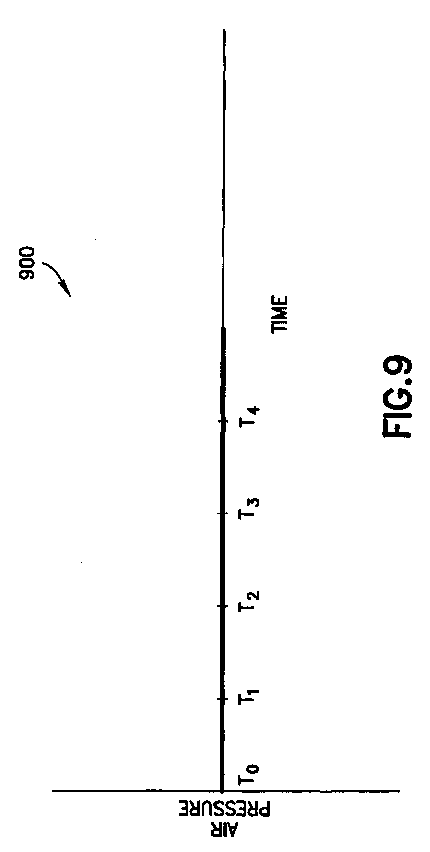

If an increase in air pressure is not detected between T₁ and T₂, system software 722 will instruct robotic arm 102 to reject pipette tip 202 and acquire a new pipette 202 tip from the next location. Ejection of a defective pipette tip 202 is discussed in detail with respect to Figure 9.

Figure 9 illustrates a graph depicting an example of air pressure versus time during pipette tip acquisition, and its subsequent ejection, for a defective pipette tip. At time T₀ in Figure 9, robotic arm 102 is moving to acquire pipette tip 202. At time T₁, pipette tip 202 is acquired, and the nozzle is inserted in the period of time defined between T₁ and T₂. As previously discussed, if a non-defective pipette tip 202 was acquired, there would be a positive change in air pressure measured by pressure transducer 208. However, in this instance, pipette tip 202 is defective, and system software 722 notes that no change in air pressure has occurred. Therefore, from time T₂ to T₃, robotic arm 102 moves pipette device 200 to a position in which defective pipette tip 202 can be discarded.

In rejecting pipette tip 202, robotic arm 102 moves from pipette tip 202 acquisition location, to an area where used or defective pipette tips 202 can be discarded, usually a waste container. This occurs from time T₂ to time T₃. Pipette tips 202 are ejected from pipetter device 200 by over-driving the air pump 210 piston 210A to overdrive position 224 in air pump chamber 214, which engages the tip ejector assembly, and ejects defective pipette tips 202 into a waste container. The process by which this occurs was described above in detail with respect to Figures 3-7. Because pipette tip 202 is defective (i.e. no filter 206). There will be no change in air pressure, even though piston 210A has moved to overdrive position 224. All the air simply escapes through the unrestricted opening 220 of pipette tip 202.

As piston 210A then moves to its originating position, which occurs at time T₄, the air pressure will not change. This is because there is no restriction to the flow of air within pipetter device 200. After rejecting defective pipette tip 202, robotic arm 102 can move pipetter device 200 to its starting position, or to a position to acquire a new pipette tip 202. While robotic arm is moving pipetter device 200, piston 210A is recovering from its overdrive operation.

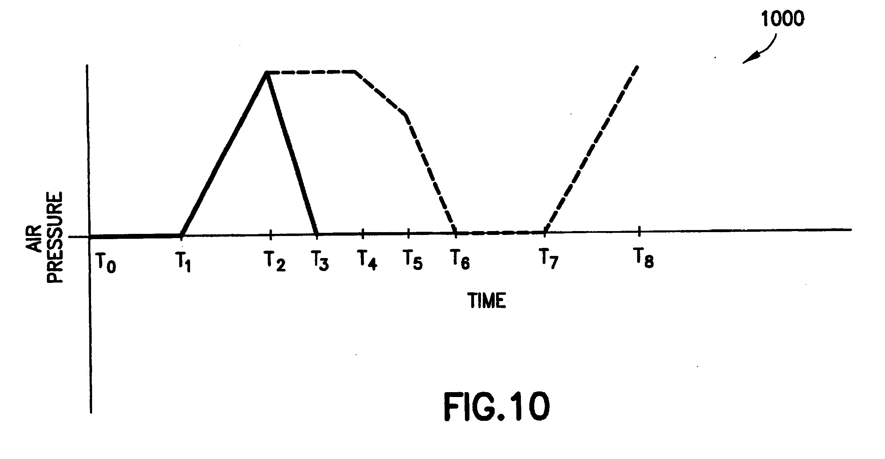

Figure 10 illustrates a graph depicting an example of air pressure versus time during ejection of a non-defective pipette tip. In Figure 10, it is assumed a non-defective tip has already been acquired, and may have been used, but that in any case, it is desirable to eject it, and to acquire a new pipette tip 202 for a new use.

At time T₁, in Figure 10, motor 302 is beginning to move piston 210A to overdrive position 224. This action also caused lead screw 304 to engage the tip ejection assembly, which ultimately causes ejection bar 312 to force the non-defective pipette tip(s) 202 off nozzle(s) 204. Because these are non-defective pipette tips 202, filter 206 will restrict air being forced out of air pump chamber 214, and air pressure will rise. Pressure transducer 208 measures this air pressure rise and this information is communicated to controller board 726, and ultimately processor 716.

At time T₂, the tip ejection assembly has moved to a position where ejection bar 312 should force pipette tip 202 away from nozzle 204. Between time T₂ and T₃ there will be a sudden decrease in air pressure, and the measured air pressure should for a proper ejection, drop to a reading of, or about, zero. In general the ejection period could be sudden, but it might also be gradual; however, in a proper ejection of a non-defective pipette tip 202 the decrease in air pressure from T₂ to T₃ will be very quick. Therefore, at some short time later T₄, a subsequent air pressure reading should indicate at, or about, zero, indicating no significant air pressure measured by pressure transducer 208.

If, however, at time T₄, there is still a significant air pressure reading, this might indicate the ejection of pipette tip 202 was not successfully accomplished. The measured air pressure would then be indicated by the dashed lines in Figure 10. Processor 716 recognizes that the air pressure should have returned to zero by the time T₄, or even T₅, but it has not. Therefore, it will attempt the tip ejection process again. As in the case of a non-defective pipette tip 202 acquisition, discussed in reference to Figure 8, air pressure will eventually begin to reduce because of the porous nature of filter 206. This is shown in the drop of pressure at T₅. From time T₅ to T₆ piston 210A returns to its originating position 212, and causes the air pressure to return to, or about, zero.

At some time later T₇, the ejection process will begin again. Measured air pressure will rise, and at time T₈ the ejection assembly will again have moved to the position where ejection should have occurred.
Thus, by measuring the air pressure through pressure transducer 208, processor 716 can quickly determine whether non-defective pipetting tip 202 was properly ejected, and if not, re-active the tip ejection procedure.

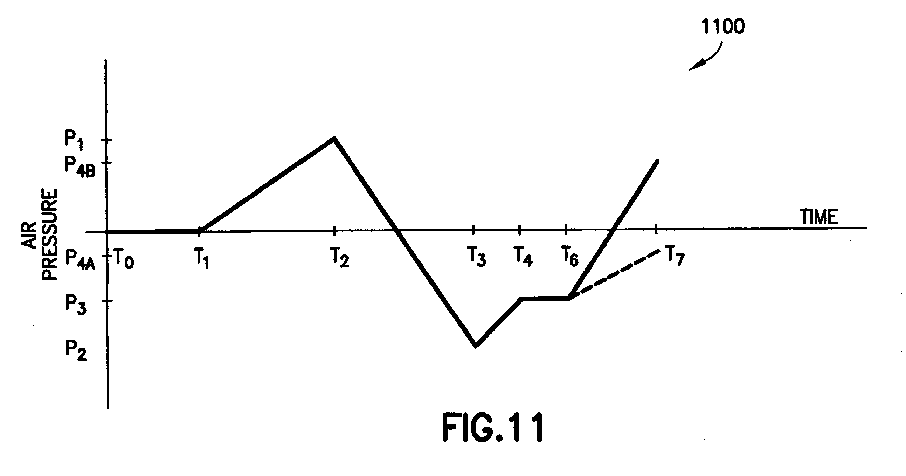

Figure 11 illustrates a graph depicting an example of air pressure versus time during insertion of a pipette tip into a fluid sample. During the transfer of fluid samples 218 there is a need to limit the depth pipette tip 202 is submerged into container 216 to prevent overflowing and to minimize fluid build-up on the outer surface of pipette tip 202. This is accomplished by monitoring the pressure within pipette tip 202 as it is submerged into fluid sample 218 to ascertain when pipette tip 202 insertion has occurred.

The presence of fluids 218 in a container 216 is determined by measurement of the signal generated by pressure transducer 208. Even a short insertion, e.g. several millimeters, of pipette tip 202 into fluid sample 218, will cause a pressure change, readily ascertainable by pressure transducer 208 and system software 722.

However, the insertion of pipette tip 202 into fluid 218 by several millimeters to achieve reliable results may not be, under some circumstances, advantageous. Sometimes there is very little fluid to be spared, or, the fluid needs to be transferred as rapidly as possible. Therefore, and alternative method for ascertaining when pipette tip 202 insertion has occurred is to move pipette tip 202 through the air-to-liquid interface 222 while pump 210 is aspirating. In this manner, an adequate signal is achieved when opening 220 of pipette tip 202 initially penetrates fluid 218. This approach allows detection of lower volumes of fluid 218 in small containers 216. Detection of volumes as small as a milliliter are possible because pipette tip 202 needs only penetrate the air-to-liquid interface 222 a very small amount.

Referring to Figure 11, prior to insertion of pipette tip 202 into fluid sample 218, robotic arm 102 moves pipetter device 200 into position during the period of time from T₀ to T₁. From time T₁ to T₂, pipette tip 202 is moved into fluid sample 218. As pipette tip 202 is submerged into the fluid, fluid sample 218 compresses the air inside of pipette tip 202. This compression registers as pressure reading P₁. After a predetermined pressure is reached, P₁, system software 722 commands robotic arm 102 to stop moving pipette tip 202 further into container 216. This occurs at time T₂. Pipetter device 200 then aspirates fluid sample 218 into opening 220 of pipette tip 202, which is submerged in fluid sample 218. This occurs from time T₂ to T₃, and the pressure changes from P₁ to P₂. P₂ is negative because air pump 210 is creating a vacuum to draw fluid sample 218 into pipette tip 202. As fluid is drawn into pipette tip 202, robotic arm 102 moves pipette tip 202 downward into container 216 at a speed based on the rate of aspiration and the diameter of the container 216.

The volume of fluid aspirated into the pipette tip can be verified using pressure transducer 208. For example, U.S. patent No. 4,780,833 describes a system and method for determining the volume of a liquid sample drawn into a similar pipetter device 200, by measuring the head pressure above the fluid column with knowledge of the fluid's specific gravity.

At time T₃ aspiration of pipette tip 202 is stopped. The measured air pressure settles from P₂ to P₃. P₃ is the air pressure that corresponds directly to the volume of liquid in pipette tip 202. P₂ is the air pressure equal to the volume of aspirated fluid plus the friction force of the aspirated fluid sample 218A to pipette tip 202 (inner wall surface) interface, due to surface tension. As the fluid is drawn up, it resists movement through friction; that friction is caused by, or directly proportional to, the surface tension of the fluid. When aspiration ceases, so does movement of the fluid and the friction due to the fluid's surface tension. Thus, at time T₄, the measured air pressure is equivalent to the weight of aspirated fluid sample 218A, and through use of its specific gravity (which is known, a priori), the fluid's volume is likewise known.

From time T₄ to T₅, robotic arm 102, at the command of system software 322, moves pipette device 200 to another location where another container, 216A, might be located to dispense the aspirated fluid into. At time T₅, piston 210A begins pumping the aspirated fluid out, and at time T₆ the desired amount of fluid has been expelled. The resultant pressure, P₄ or P₄ might still be negative (i.e., in the case that only a small amount of aspirated fluid was pumped out, and there is still a negative pressure retaining the fluid) or positive (i.e., in the case that all or nearly all of the fluid pumped out, requiring greater "pumping" force).

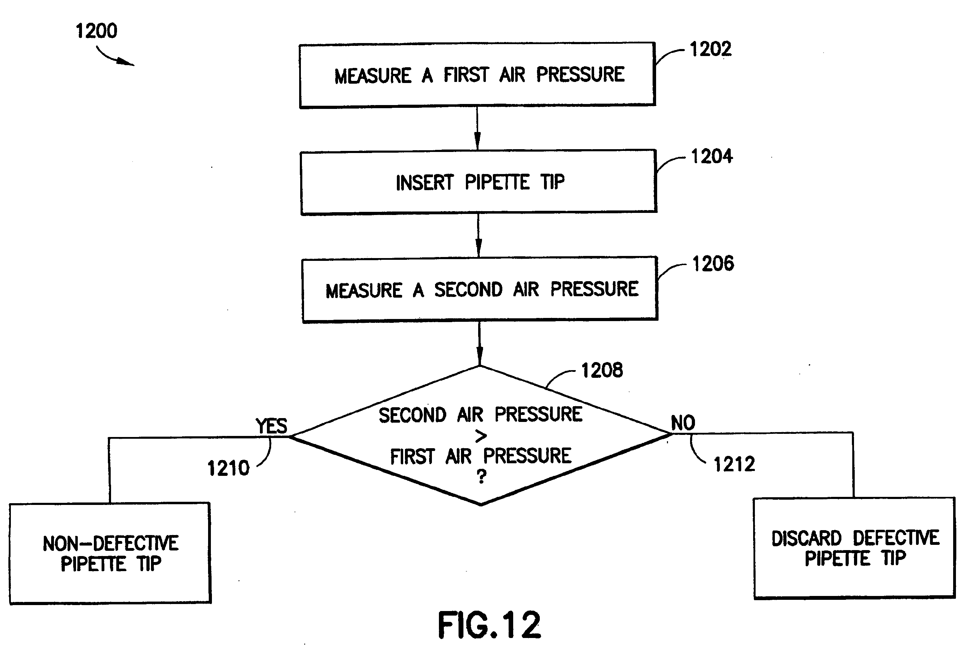

Figure 12 illustrates a flow diagram of a first method according to an embodiment of the invention. The flow diagram illustrated in Figure 12 shows the steps in a method for detecting defective pipette tips, as discussed above. The method begins with step 1202, in which pressure transducer 208 measures a first air pressure, which is recorded by processor 716. In step 1204, robotic arm 102 moves pipetter device 200 such that nozzle 204 may be inserted over pipette tip receptacle 202A of pipette tip 202. In step 1206, a second air pressure is measured and recorded, soon after the pipette tip 202 has been inserted over nozzle 204. Processor 716 then compares the first air pressure to the second air pressure: If the second air pressure is greater than the first air pressure, then a non-defective pipette tip 202 has been acquired by robotic arm 102, and it may be used for acquiring fluids (yes path 1210 from decision box 1208).

If however, the first and second air pressure are substantially the same, i.e., there has been no change in air pressure in the acquisition of pipette tip 202 by robotic arm 102, then processor 716 determines that a defective pipette tip 202 has been acquired, and can discard it, using the ejection process discussed in reference with Figure 9 (no path 1212 from decision box 1208).

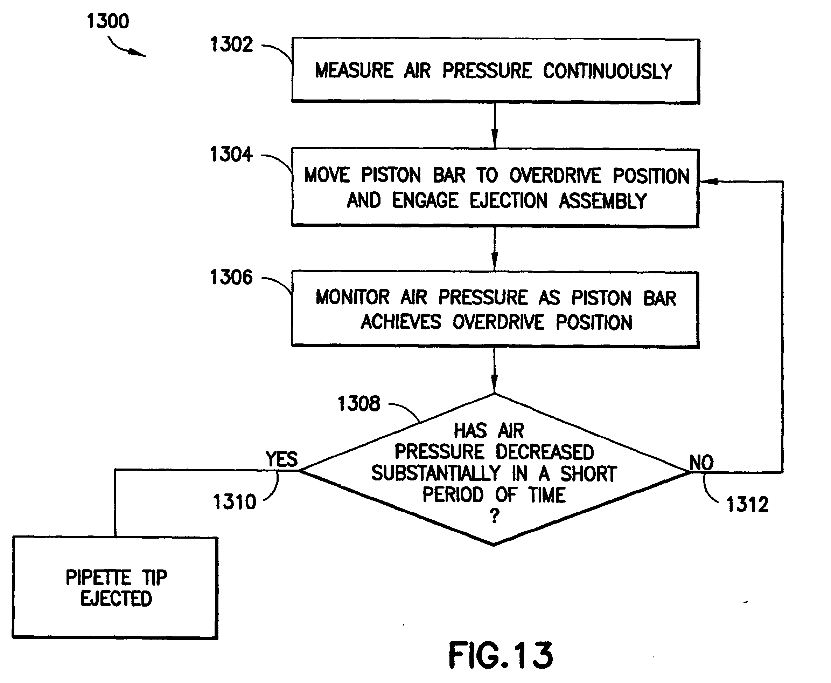

Figure 13 illustrates a flow diagram of a second method according to another embodiment of the invention. The flow diagram illustrated in Figure 13 shows the steps in a method for determining whether a non-defective pipette tip has been ejected, as discussed above. The method according to Figure 13 begins with step 1302. In step 1302, air pressure is measured continuously by pressure transducer 208, and recorded by processor 716. Then, in step 1304, processor 716 decides to eject the non-defective pipette tip 202, and causes robotic arm to engage the tip ejection assembly. Engaging the tip ejection assembly means that motor 302 begins to overdrive air pump 210, and turn lead screw 304, etc., as described with reference to Figures 3-6. As the piston bar reaches its overdrive position 224, processor 716 again monitors the measured air pressure: At this point, the tip ejection assembly should have forced pipette tip(s) 202 off nozzle(s) 204. Therefore, in step 1308, processor 716 compares the air pressure just before piston bar 210 reached overdrive position 224, and the air pressure just after piston bar reached overdrive position 224, to determine whether a substantial and sudden decrease in air pressure has occurred. This decrease in air pressure would be caused by air being suddenly released when pipette tip 202 was forcibly ejected from nozzle 204, and the pressurized air in air pump chamber 214 and pipette tip receptacle 202A was released into the atmosphere. If there was a sudden and substantial decrease in the measured air pressures, then pipette tip 202 was properly ejected (yes path 1310 from decision box 1308).

If however, there was no sudden and substantial decrease in the air pressure between the time just before piston bar 210 reached overdrive position 224, and the air pressure just after piston bar reached overdrive position 224, the processor 716 determines that pipette tip 202 was not properly ejected (no path 1712 from decision box 1708). It will cause piston bar 210 to return to an intermediate position (i.e., between its originating position and overdrive position) and begin the process of ejecting pipette tip 202 again (i.e., it returns to step 1304). It may do this several times before pipette tip 202 is properly ejected.

The embodiments described above are merely given as examples and it should be understood that the invention is not limited thereto. It is of course possible to embody the invention in specific forms other than those described without departing from the scope of the invention.

## Claims

1. A method for determination of a pipette tip's (202) condition, comprising:
measuring air pressure in a nozzle (204);
acquiring a pipette tip (202) with the nozzle (204);
determining whether said pressure in the nozzle (204) changes upon acquisition of the pipette tip (202); and
ascertaining the condition of the acquired pipette tip (202) based on the change in air pressure.

2. The method according to claim 1, wherein the ascertaining comprises:
determining that an acquired pipette tip (202)is defective if said air pressure remains substantially constant during acquisition of said acquired pipette tip (202).

3. The method according to claim 1, wherein the ascertaining comprises:
determining that a pipette tip (202) is non-defective if there is a change in air pressure during acquisition of said acquired pipette tip (202).

4. A method for determination of a pipette tip's (202) condition, comprising:
measuring air pressure in a nozzle (204);
acquiring a pipette (202) tip with the nozzle (204);
determining a maximum air pressure in the nozzle (204) upon acquisition of the pipette tip (202); and
ascertaining the acquired pipette tip's (202) condition based on the rate of change in air pressure after the maximum air pressure was reached.

5. The method according to claim 4, wherein the ascertaining comprises:
determining the rate of change of air pressure for a known non-defective acquired pipette tip (202).

6. The method according to claim 5, wherein the ascertaining comprises:
determining a defective pipette tip (202) if the rate of change of air pressure is less than the rate of change of air pressure for the known non-defective pipette tips (202).

7. A system for determination of a condition of a pipette tip (202), comprising:
an air pump in communication with a nozzle (204);and
a pressure transducer, adapted to measure a change in air pressure in the nozzle (204) as a pipette tip (202)is acquired by the nozzle (204).

8. The system according to claim 7, further comprising:
a processor adapted to determine that an acquired pipette tip (202) is defective if said air pressure remains substantially constant during acquisition of said acquired pipette tip (202).

## Patentansprüche

1. Verfahren zum Bestimmen des Zustands einer Pipettenspitze (202), umfassend:
das Messen des Luftdrucks in einer Düse (204);
das Erfassen einer Pipettenspitze (202) mit der Düse (204);
das Bestimmen, ob sich der Druck in der Düse (204) beim Erfassen der Pipettenspitze (202) ändert; und
das Ermitteln des Zustands der erfassten Pipettenspitze (202) auf Basis der Luftdruckveränderung.

2. Verfahren gemäß Anspruch 1, wobei das Ermitteln Folgendes umfasst:
das Feststellen, dass eine erfasste Pipettenspitze (202) defekt ist, wenn der Luftdruck während des Erfassens der erfassten Pipettenspitze (202) im Wesentlichen konstant bleibt.

3. Verfahren gemäß Anspruch 1, wobei das Ermitteln Folgendes umfasst:
das Feststellen, dass eine Pipettenspitze (202) nicht defekt ist, wenn während des Erfassens der erfassten Pipettenspitze (202) eine Luftdruckveränderung gegeben ist.

4. Verfahren zum Bestimmen des Zustands einer Pipettenspitze (202), umfassend:
das Messen des Luftdrucks in einer Düse (204);
das Erfassen einer Pipettenspitze (202) mit der Düse (204);
das Bestimmen eines maximalen Luftdrucks in der Düse (204) beim Erfassen der Pipettenspitze (202); und
das Ermitteln des Zustands der erfassten Pipettenspitze (202) auf Basis der Geschwindigkeit der Luftdruckveränderung nach Erreichung des maximalen Luftdrucks.

5. Verfahren gemäß Anspruch 4, wobei das Ermitteln Folgendes umfasst:
das Bestimmen der Geschwindigkeit der Luftdruckveränderung bei einer bekannten, nicht defekten, erfassten Pipettenspitze (202).

6. Verfahren gemäß Anspruch 5, wobei das Ermitteln Folgendes umfasst:
das Bestimmen einer defekten Pipettenspitze (202), wenn die Geschwindigkeit der Luftdruckveränderung geringer ist als die Geschwindigkeit der Luftdruckveränderung bei den bekannten, nicht defekten Pipettenspitzen (202).

7. System zum Bestimmen eines Zustands einer Pipettenspitze (202), umfassend:
eine Luftpumpe, die mit einer Düse (204) in Verbindung steht; und
einen Druckwandler, der dazu angepasst ist, eine Luftdruckveränderung in der Düse (204) zu messen, während eine Pipettenspitze (202) von der Düse (204) erfasst wird.

8. System gemäß Anspruch 7, weiters umfassend:
einen Prozessor, der dazu angepasst ist, festzustellen, dass eine erfasste Pipettenspitze (202) defekt ist, wenn der Luftdruck während des Erfassens der erfassten Pipettenspitze (202) im Wesentlichen konstant bleibt.

## Revendications

1. Procédé pour déterminer l'état de l'embout d'une pipette (202), comprenant :
la mesure de la pression d'air dans une buse (204) ;
la saisie d'un embout de pipette (202) avec la buse (204) ;
une détermination permettant de savoir si ladite pression dans la buse (204) change lors de la saisie de l'embout de la pipette (202) ; et
l'établissement de la condition de l'embout de pipette saisi (202) sur la base du changement de la pression d'air.

2. Procédé selon la revendication 1, dans lequel l'établissement comprend :
la détermination qu'un embout de pipette saisi (202) est défectueux si ladite pression d'air reste sensiblement constante au cours de la saisie dudit embout de pipette saisi (202).

3. Procédé selon la revendication 1, dans lequel l'établissement comprend :
la détermination qu'un embout de pipette (202) n'est pas défectueux s'il y a un changement de la pression d'air au cours de la saisie dudit embout de pipette saisi (202).

4. Procédé pour déterminer l'état de l'embout d'une pipette (202), comprenant :
la mesure de la pression d'air dans une buse (204) ;
la saisie d'un embout de pipette (202) avec la buse (204) ;
une détermination de la pression d'air maximum dans la buse (204) lors de la saisie de l'embout de la pipette (202) ; et
l'établissement de l'état de l'embout de pipette saisi (202) sur la base de la vitesse de changement de la pression d'air une fois que la pression d'air maximum a été atteinte.

5. Procédé selon la revendication 4, dans lequel l'établissement comprend :
la détermination de la vitesse de changement de la pression d'air pour un embout de pipette (202) saisi non défectueux connu.

6. Procédé selon la revendication 5, dans lequel l'établissement comprend :
la détermination qu'un embout de pipette est défectueux (202) si la vitesse de changement de pression d'air est inférieure à la vitesse de changement de la pression d'air pour les embouts de pipette (202) non défectueux connus.

7. Système pour déterminer l'état de l'embout d'une pipette (202), comprenant :
une pompe à air en communication avec une buse (204) ; et
un transducteur de pression, adapté pour mesurer un changement de pression d'air dans la buse (204) quand un embout de pipette (202) est saisi par la buse (204).

8. Système selon la revendication 7, comprenant en outre :
un processeur adapté pour déterminer qu'un embout de pipette saisi (202) est défectueux si ladite pression d'air reste sensiblement constante au cours de la saisie dudit embout de pipette saisi (202).
